# EUROPEAN PATENT APPLICATION

(11) **EP 4 350 044 A2**
(43) Date of publication of application: **10.04.2024**
(21) Application number: 23195656.6
(22) Date of filing: 06.09.2023
(51) Int. Cl.: C25B 1/04, C25B 11/053, C25B 15/08

(54) **ELECTRODE FOR ELECTROCHEMICAL REACTION DEVICE, MEMBRANE ELECTRODE ASSEMBLY, AND ELECTROCHEMICAL REACTION DEVICE**

(30) Priority: 03.10.2022 JP 2022159801
(71) Applicant: Kabushiki Kaisha Toshiba, Minato-ku Tokyo (JP); Toshiba Energy Systems & Solutions Corporation, Saiwai-ku Kawasaki-shi Kanagawa (JP)
(72) Inventor: SUGANO, Yoshitsune, Tokyo (JP); ONO, Akihiko, Tokyo (JP); YOSHINAGA, Norihiro, Tokyo (JP)
(74) Representative: Marks & Clerk LLP

(57) **Abstract**

An electrode for electrochemical reaction device of an arrangement includes: a substrate; and a catalyst lamination provided on the substrate, and having a plurality of catalyst layers, and void layers respectively arranged between the plurality of catalyst layers adjacent to each other. The plurality of catalyst layers include a first catalyst layer arranged at a position close to the substrate and having a first thickness, and a second catalyst layer arranged at a position separated from the substrate and having a second thickness that is smaller than the first thickness.

## Description

### FIELD

Arrangements disclosed herein relate to an electrode for electrochemical reaction device, a membrane electrode assembly, and an electrochemical reaction device.

### BACKGROUND

As a typical example of an electrochemical reaction device such as an electrolysis device, there is known a water electrolysis device that electrolyzes water (H₂O) to produce hydrogen (H₂) and oxygen (O₂). The water electrolysis device includes an electrolysis cell provided with, for example, an anode, a cathode, and a polymer electrolyte membrane (PEM) sandwiched by the anode and the cathode. Regarding the water electrolysis device, practical application of a solid oxide electrolysis cell (SOEC) that adopts a high-temperature steam electrolysis method in which water is electrolyzed in a high-temperature steam state, and that is formed by sandwiching an electrolyte composed of a solid oxide with an anode and a cathode, is also being promoted. The electrolyte composed of solid oxide is also used for a fuel cell that obtains electric energy through an electrochemical reaction, and a solid oxide fuel cell (SOFC) having a configuration similar to that of the SOEC is attracting attention.

In an electrochemical reaction device such as a water electrolysis device, for example, water (H₂O) is supplied to an anode and the water is electrolyzed on the anode side to produce oxygen (O₂) and hydrogen ions (H⁺), and the hydrogen ions (H⁺) are sent to a cathode side via an electrolyte membrane and hydrogen (H₂) is produced on the cathode side. In the anode to which water is supplied, it is desired to efficiently supply liquid such as water to a catalyst layer, and to efficiently discharge gas such as oxygen (O₂) being a product from the catalyst layer. However, the current catalyst layer cannot satisfy such a demand sufficiently. Accordingly, an electrode having a catalyst layer capable of efficiently supplying liquid and efficiently discharging gas being a product, is being required.

### SUMMARY

A subject be solved by the aspect of the present invention is to provide an electrode for electrochemical reaction device capable of efficiently supplying liquid and efficiently discharging gas being a product, a membrane electrode assembly, and an electrochemical reaction device.

According to the aspects of the present invention, there are provided an electrode for electrochemical reaction device capable of efficiently supplying liquid and efficiently discharging gas being a product, a membrane electrode assembly, and an electrochemical reaction device.

### BRIEF DESCRIPTION OF THE DRAWINGS

FIG. 1 is a sectional view illustrating an electrode for electrochemical reaction device according to a first arrangement.
FIG. 2 is a view for explaining a manufacturing method of the electrode illustrated in FIG. 1.
FIG. 3 is a sectional view illustrating an electrode for electrochemical reaction device according to a second arrangement.
FIG. 4 is a sectional view illustrating an electrode for electrochemical reaction device according to a third arrangement.
FIG. 5 is a sectional view illustrating an electrode for electrochemical reaction device according to a fourth arrangement.
FIG. 6 is a view illustrating an electrochemical reaction device according to an arrangement.

### DETAILED DESCRIPTION

An electrode for electrochemical reaction device of an arrangement includes: a substrate; and a catalyst lamination provided on the substrate, and having a plurality of catalyst layers, and void layers respectively arranged between the plurality of catalyst layers adjacent to each other. In the electrode for electrochemical reaction device of the arrangement, the plurality of catalyst layers include a first catalyst layer arranged at a position close to the substrate and having a first thickness, and a second catalyst layer arranged at a position separated from the substrate and having a second thickness that is smaller than the first thickness.

Hereinafter, an electrode for electrochemical reaction device, a membrane electrode assembly, and an electrochemical reaction device of arrangements will be explained with reference to the drawings. In respective arrangements to be described below, substantially the same components are denoted by the same reference numerals, and explanation thereof is sometimes partially omitted. The drawings are schematic, and the relation of thickness and planer dimension, a thickness ratio of the respective parts, and so on may be different from actual ones. The term indicating a direction such as an upper or lower direction in the explanation, indicates a relative direction when an electrode formation surface of a substrate to be described later is faced upward, unless otherwise specified, and is sometimes different from an actual direction based on a gravitational acceleration direction.

### (First arrangement)

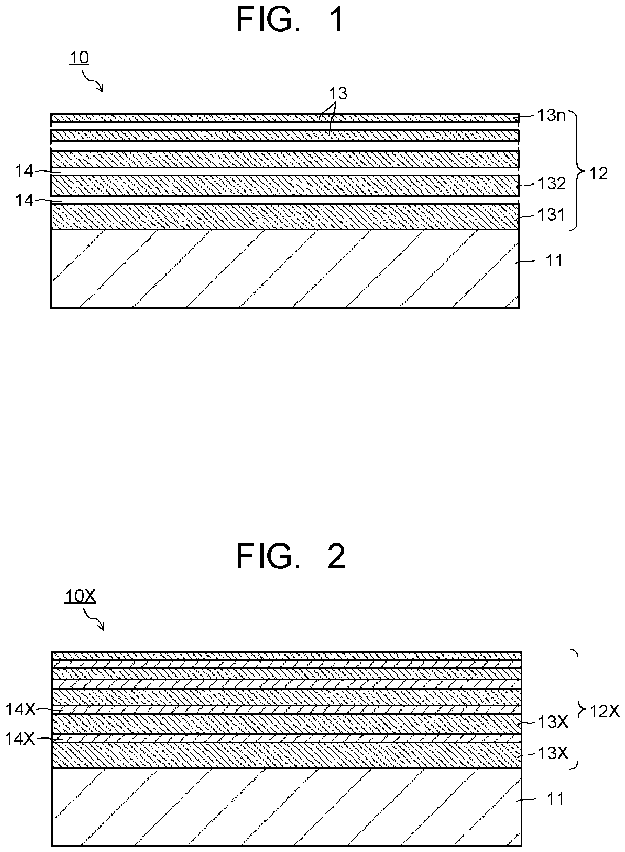

FIG. 1 is a sectional view illustrating an electrode for electrochemical reaction device according to a first arrangement. An electrode 10 for electrochemical reaction device illustrated in FIG. 1 includes a substrate 11, and a catalyst lamination 12 provided on the substrate 11. The catalyst lamination 12 includes a plurality of catalyst layers 13, 13 ···, and void layers 14 respectively arranged between the catalyst layers 13 adjacent to each other.

The substrate 11 is a conductive substrate formed by using a metal material such as metal of titanium (Ti), nickel (Ni), iron (Fe), or the like, and an alloy containing at least one of these metals (SUS, for example), a carbon material such as carbon cloth or carbon paper, or the like. The substrate 11 may also be a mesh substrate or a porous substrate containing these materials.

The catalyst layer 13 is composed of a material appropriately selected according to use application of the electrode 10. When the electrode 10 is applied to, for example, an anode of a water electrolysis cell, namely, an oxidation electrode that electrolyzes supplied water (H₂O) to produce oxygen (O₂), hydrogen ions (H⁺), and electrons (e⁻), the catalyst layer 13 preferably contains at least one noble metal (NM) selected from a group consisting of iridium (Ir), ruthenium (Ru), platinum (Pt), palladium (Pd), rhodium (Rh), osmium (Os), gold (Au), and silver (Ag), an alloy containing the noble metal (NM), an oxide of the noble metal (NM), or a composite oxide containing the noble metal (NM). When the electrode 10 forms the anode of the water electrolysis cell, it is more preferable that the catalyst layer 13 uses the oxide of the noble metal NM (NMO_{y}) or the composite oxide containing the noble metal NM (NM₁₋ₓAₓO_{y}, wherein A is a non-noble metal element and examples thereof are Fe, Co, Ni, Mn, Al, and the like, for example, and x is an arbitrary number of greater than 0 and less than 1). As the noble metal NM, it is more preferable to use Ir or Ru.

The catalyst lamination 12 provided on the substrate 11 has a first catalyst layer 131 formed on the substrate 11, and has catalyst layers 132, ··· 13n sequentially formed on the first catalyst layer 131 via void layers 14. FIG. 1 illustrates a state where five layers of the catalyst layer 13 are respectively formed on the substrate 11 via the void layers 14, but the number of layers of the catalyst layer 13 is not limited to the above. The number of layers of the catalyst layer 13 is preferably 5 or more and 20 or less. In the catalyst lamination 12 of the first arrangement, the first catalyst layer 131 formed on the substrate 11, namely, the first catalyst layer 131 arranged at a position close to the substrate 11, has a first thickness. On the other hand, the catalyst layer 13n of the n-th layer, for example, that is arranged at a position separated from the substrate 11 (which will be described as a second catalyst layer 13n in this case) has a second thickness that is smaller than the first thickness.

In the first arrangement, the second thickness of the uppermost second catalyst layer 13n out of the plurality of catalyst layers 13 is made to be smaller than the first thickness of the first catalyst layer 131 formed on the substrate 11, as described above. When the electrode 10 is used as the anode of the water electrolysis cell, for example, the uppermost second catalyst layer 13n serves as the catalyst layer 13 that is directly brought into contact with water (H₂O) supplied to the anode side. The second thickness of such an uppermost second catalyst layer 13n is made to be smaller than the first thickness of the first catalyst layer 131 arranged at a position close to the substrate 11, which makes it easy for the supplied water to reach the catalyst layer 13 on the inner layer side via the second catalyst layer 13n with a small thickness. Besides, it is possible to allow oxygen (O₂) produced through electrolysis of water (H₂O) to be easily released from the catalyst layer 13 on the inner layer side via the uppermost second catalyst layer 13n with a small thickness. These make it possible to activate an electrolysis reaction of water (H₂O), for example.

In FIG. 1, the uppermost layer out of the plurality of catalyst layers 13, namely, the outermost layer that exists at the farthest position from the substrate 11 out of the plurality of catalyst layers 13 is set to the second catalyst layer 13n, but not necessarily limited to this. The second catalyst layer 13n having the second thickness that is smaller than the first thickness of the first catalyst layer 131 arranged at a position close to the substrate 11, is not limited to the uppermost catalyst layer 13n, and may also be the catalyst layer 13 being the second layer, the third layer, or the like from the outermost layer. Even in such a case, it becomes easy for the liquid such as supplied water to reach the catalyst layer 13 on the inner layer side, and it is also possible to allow the gas such as oxygen (O₂) being a product to be easily released. These make it possible to activate an electrochemical reaction such as an electrolysis reaction of water (H₂O), for example. The second thickness of the second catalyst layer 13n arranged at a position separated from the substrate 11 is preferably set to 2 nm or more and 50 nm or less, in consideration of easiness of liquid passage and easiness of gas release.

The first catalyst layer 131 formed on the substrate 11 preferably has a thickness of a certain degree or more in order to increase mechanical properties of the plurality of catalyst layers 13 stacked via the void layers 14. Specifically, if the first thickness of the first catalyst layer 131 is reduced to be about the same as the second thickness of the uppermost second catalyst layer 13n, the mechanical properties and the like of the first catalyst layer 131 served as a base are likely to decrease, which makes it difficult to favorably form the plurality of catalyst layers 13 in sequence via the void layers 14. From such a viewpoint, the first thickness of the first catalyst layer 131 is preferably set to 3 nm or more and 100 nm or less. If the first thickness of the first catalyst layer 131 is less than 3 nm, the mechanical properties of the stacked catalyst layers 13 cannot be increased. Even if the first thickness of the first catalyst layer 131 exceeds 100 nm, the mechanical properties cannot be increased any more, and not only that, an amount of use of noble metal, for example, is increased to increase a manufacturing cost of the electrode 10.

Besides, in the catalyst lamination 12 illustrated in FIG. 1, the plurality of catalyst layers 13 have thicknesses that are sequentially reduced from the catalyst layer 131 formed on the substrate 11 toward the uppermost catalyst layer 13n. By adopting the plurality of catalyst layers 13 having such thicknesses, it is possible to make it easier for the liquid such as supplied water to reach the catalyst layer 131 that exists at a position separated from the uppermost catalyst layer 13n, and it is also possible to allow the gas such as oxygen (O₂) being a product to be more easily released, while maintaining the mechanical properties of the plurality of catalyst layers 13 stacked via the void layers 14. These make it possible to further activate the electrochemical reaction such as the electrolysis reaction of water (H₂O), for example.

In the electrode 10 of the first arrangement, each of the plurality of catalyst layers 13 is preferably a porous body having a void ratio of 10% or more and 90% or less. This makes it possible to increase the easiness of liquid passage and the easiness of gas release. When the void ratio of the catalyst layer 13 is less than 10%, it is not possible to increase the easiness of liquid passage and the easiness of gas release. When the void ratio of the catalyst layer 13 exceeds 90%, the mechanical properties of the plurality of catalyst layers 13 cannot be maintained, resulting in that stability and reliability of the electrode 10 may be impaired. Further, a thickness of each of the void layers is preferably 3 nm or more and 50 nm or less.

Dimensions and compositions of the substrate 11, the catalyst layers 13, and the void layers 14 can be measured by using, for example, a scanning electron microscope (SEM), a fluorescent X-ray analysis method (XRF), an element mapping with a transmission electron microscope (TEM) and a high-angle annular dark-field method (HAADF) of the TEM, and a line analysis of energy dispersive X-ray spectroscopy (EDS). For example, the thicknesses of the plurality of catalyst layers 13 can be measured in a manner that, for example, a cross section of the catalyst lamination 12 is imaged by the SEM, and gradation based on catalysts and voids of the cross-sectional SEM image is image-processed. The void ratios of the catalyst layers 13, and the like can also be measured in the same manner.

In the electrode 10 of the first arrangement, the plurality of catalyst layers 13 stacked via the void layers 14 can be produced in a manner as follows, for example. Specifically, the catalyst lamination 12 can be produced in a manner that a noble metal layer and a non-noble metal layer are alternately stacked through multitarget sputtering, and then at least a part of the non-noble metal layer is dissolved and removed through an etching process. FIG. 2 is a sectional view for explaining an example of a method of forming the catalyst lamination 12. In a manufacturing process of the catalyst lamination 12, a precursor 10X is produced by alternately forming each of precursor layers 13X of the catalyst layers 13 and each of sacrificial layers 14X specifying forming positions of the void layers 14, by using sputtering, as illustrated in FIG. 2.

The precursor layer 13X contains a catalyst material such as an anode catalyst material. When forming the precursor layers 13X, thicknesses of the precursor layers 13X are set in consideration of the thicknesses of the catalyst layers 13. Accordingly, it is possible to obtain the plurality of catalyst layers 13 with sequentially-changed thicknesses. When the precursor layer 13X is amorphous, a crystal structure may be oriented through performance of heat treatment. In a case of using a catalyst containing an iridium oxide or the like, it is preferable to adopt reactive sputtering in which iridium metal is sputtered in a sputtering apparatus, and at the same time, an oxygen gas is added into a chamber to oxidize iridium. The sacrificial layer 14X is a hole-forming material layer that is stacked alternately with the precursor layer 13X and then removed by etching, to thereby form the void layer 14.

A hole-forming material used for the sacrificial layer 14X contains, for example, at least one non-noble metal or an oxide thereof. Examples of the non-noble metal include Fe, Co, Ni, Mn, Al, Zn, Ta, W, Hf, Si, Mo, Ti, Zr, Nb, V, Cr, Sn, Sr, and so on. The hole-forming material layer as the sacrificial layer 14X can be removed while leaving the catalyst layer 13, through selective etching using chemicals of acid, alkali, or the like, for example. Therefore, by removing the sacrificial layers 14X through etching, the void layers 14 are formed at the forming positions of the sacrificial layers 14X. It is also possible to perform heat treatment for facilitating dissolution of the sacrificial layers 14X.

The void layers 14 can be formed by removing the hole-forming material layers as the sacrificial layers 14X through etching. In this method, it is possible to control film thicknesses, in a nanometer order, of the precursor layers 13X as the catalyst layers 13 and the hole-forming material layers as the sacrificial layers 14X, and further, it is easy to control compositions and oxidation states, so that the degree of design freedom of the catalyst layers 13 can be improved.

The hole-forming material may also be contained in the precursor layer 13X. When a mixed sputtering target containing a raw material of the precursor layer 13X and a raw material of the hole-forming material is adopted and sputtering thereof is performed, the precursor layer 13X containing the hole-forming material can be formed. By performing an etching process on such a precursor layer 13X, it is possible to remove the hole-forming material in the precursor layer 13X to obtain the catalyst layer 13 in a porous state. Besides, the thickness, the void ratio, and the like of the catalyst layer 13 can be adjusted also by controlling sputtering conditions.

### (Second arrangement)

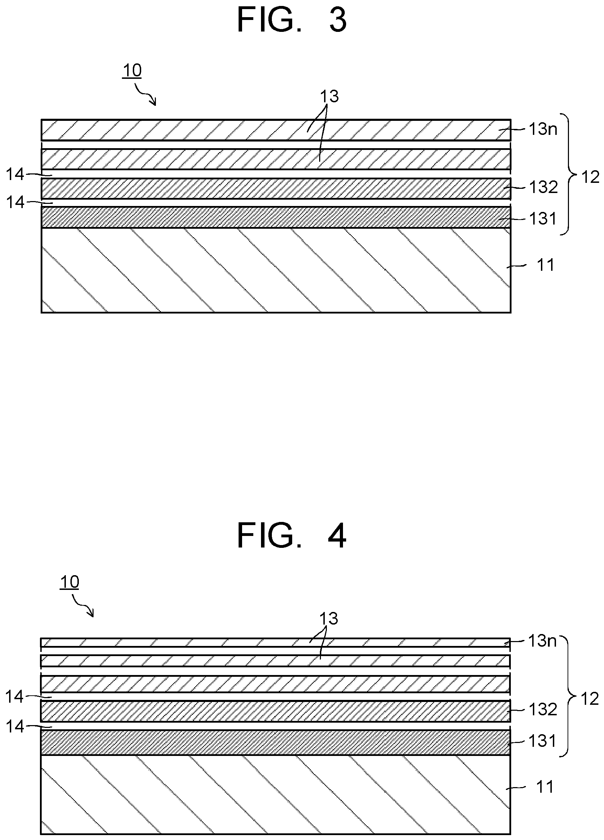

FIG. 3 is a sectional view illustrating an electrode for electrochemical reaction device according to a second arrangement. An electrode 10 for electrochemical reaction device illustrated in FIG. 3 includes a substrate 11, and a catalyst lamination 12 provided on the substrate 11. The catalyst lamination 12 includes a plurality of catalyst layers 13, 13 ···, and void layers 14 respectively arranged between the catalyst layers 13 adjacent to each other. The plurality of catalyst layers 13, 13 according to the second arrangement are different from those of the first arrangement in the following configuration. The difference between the second arrangement and the first arrangement will be explained below. The other configurations, for example, composing materials of the substrate 11 and the catalyst layers 13, and the like are the same as those of the first arrangement.

The catalyst lamination 12 provided on the substrate 11 has the plurality of catalyst layers 13 sequentially provided on the substrate 11 and each having the same thickness. The catalyst lamination 12 has a first catalyst layer 131 formed on the substrate 11, and has catalyst layers 132, ··· 13n sequentially formed on the first catalyst layer 131 via the void layers 14. FIG. 3 illustrates a state where four layers of the catalyst layer 13 are respectively formed on the substrate 11 via the void layers 14, but the number of layers of the catalyst layer 13 is not limited to the above. The number of layers of the catalyst layer 13 is preferably 5 or more and 20 or less. In the catalyst lamination 12 of the second arrangement, the first catalyst layer 131 formed on the substrate 11, namely, the first catalyst layer 131 arranged at a position close to the substrate 11, has a first void ratio. On the other hand, the catalyst layer 13n of the n-th layer that is arranged at a position separated from the substrate 11 (which will be described as a second catalyst layer 13n in this case) has a second void ratio that is larger than the first void ratio.

In the second arrangement, the void ratio of the uppermost second catalyst layer 13n out of the plurality of catalyst layers 13 is made to be larger than the first void ratio of the first catalyst layer 131 formed on the substrate 11, as described above. When the electrode 10 is used as the anode of the water electrolysis cell, for example, the uppermost second catalyst layer 13n serves as the catalyst layer 13 that is directly brought into contact with water (H₂O) supplied to the anode side. The second void ratio of such an uppermost second catalyst layer 13n is made to be larger than the first void ratio of the first catalyst layer 131 arranged at a position close to the substrate 11, which makes it easy for the supplied water to reach the catalyst layer 13 on the inner layer side via the second catalyst layer 13n with a large void ratio. Besides, it is possible to allow oxygen (O₂) produced through electrolysis of water (H₂O) to be easily released from the catalyst layer 13 on the inner layer side via the uppermost second catalyst layer 13n with a large void ratio. These make it possible to activate an electrolysis reaction of water (H₂O), for example.

In FIG. 3, the uppermost layer out of the plurality of catalyst layers 13, namely, the outermost layer that exists at the farthest position from the substrate 11 out of the plurality of catalyst layers 13 is set to the second catalyst layer 13n, but not necessarily limited to this. The second catalyst layer 13n having the second void ratio that is larger than the first void ratio of the first catalyst layer 131 arranged at a position close to the substrate 11, is not limited to the uppermost catalyst layer 13n, and may also be the catalyst layer 13 being the second layer, the third layer, or the like from the outermost layer. Even in such a case, it becomes easy for the liquid such as supplied water to reach the catalyst layer 13 on the inner layer side, and it is also possible to allow the gas such oxygen (O₂) being a product to be easily released. These make it possible to activate an electrochemical reaction such as an electrolysis reaction of water (H₂O), for example. The second void ratio of the second catalyst layer 13n arranged at a position separated from the substrate 11 is preferably set to 10% or more and 90% or less, in consideration of easiness of liquid passage and easiness of gas release.

Here, the first catalyst layer 131 formed on the substrate 11 preferably has a void ratio of a certain degree or more in order to increase mechanical properties of the plurality of catalyst layers 13 stacked via the void layers 14. Specifically, if the first void ratio of the first catalyst layer 131 is increased to be about the same as the second void ratio of the uppermost second catalyst layer 13n, the mechanical properties and the like of the first catalyst layer 131 served as a base are likely to decrease, which makes it difficult to favorably form the plurality of catalyst layers 13 in sequence via the void layers 14. From such a viewpoint, the first void ratio of the first catalyst layer 131 is preferably set to 10% or more and 90% or less. If the first void ratio of the first catalyst layer 131 exceeds 90%, the mechanical properties of the stacked catalyst layers 13 cannot be increased. Even if the first void ratio of the first catalyst layer 131 is less than 10%, the mechanical properties cannot be increased any more, and not only that, an amount of use of noble metal, for example, is increased to increase a manufacturing cost of the electrode 10. The first void ratio of the first catalyst layer 131 is more preferably set to 30% or more, and further, it is more preferably set to 70% or less.

Besides, in the catalyst lamination 12 illustrated in FIG. 3, the plurality of catalyst layers 13 have void ratios that are sequentially increased from the catalyst layer 131 formed on the substrate 11 toward the uppermost catalyst layer 13n. By adopting the plurality of catalyst layers 13 having such void ratios, it is possible to make it easier for the liquid such as supplied water to reach the catalyst layer 131 that exists at a position separated from the uppermost catalyst layer 13n, and it is also possible to allow the gas such as oxygen (O₂) being a product to be more easily released, while maintaining the mechanical properties of the plurality of catalyst layers 13 stacked via the void layers 14. These make it possible to further activate the electrochemical reaction such as the electrolysis reaction of water (H₂O), for example.

In the electrode 10 of the second arrangement, each of the plurality of catalyst layers 13 preferably has a thickness of 2 nm or more and 100 nm or less. This makes it possible to increase the easiness of liquid passage and the easiness of gas release while maintaining the mechanical properties. When the thickness of the catalyst layer 13 exceeds 100 nm, it is not possible to increase the easiness of liquid passage and the easiness of gas release. When the thickness of the catalyst layer 13 is less than 2 nm, the mechanical properties of the plurality of catalyst layers 13 cannot be maintained, resulting in that stability and reliability of the electrode 10 may be impaired. Further, a thickness of each of the void layers is preferably 3 nm or more and 50 nm or less. The void ratios, the thicknesses, and the like of the plurality of catalyst layers 13 in the second arrangement can be measured by a method same as that described in the first arrangement.

In the electrode 10 of the second arrangement, the plurality of catalyst layers 13 stacked via the void layers 14 can be produced in a manner that a precursor 10X is produced by alternately forming each of precursor layers 13X of the catalyst layers 13 and each of sacrificial layers 14X specifying forming positions of the void layers 14, by using sputtering, and then at least a part of the non-noble metal layer is dissolved and removed through an etching process, in the same manner as in the first arrangement, for example. At this time, by performing sputtering of the precursor layer 13X while adopting a mixed sputtering target containing a raw material composing the precursor layer 13X and a raw material of the hole-forming material, the precursor layer 13X containing the hole-forming material is formed. By performing an etching process on the precursor layers 13X with changed mixing ratios of the hole-forming material, it is possible to remove the hole-forming material in the precursor layers 13X to obtain the catalyst layers 13 in a porous state with changed void ratios. Besides, the void ratio, and the like of the catalyst layer 13 can be adjusted also by controlling sputtering conditions.

### (Third arrangement)

FIG. 4 is a sectional view illustrating an electrode for electrochemical reaction device according to a third arrangement. An electrode 10 for electrochemical reaction device illustrated in FIG. 4 has a configuration in which the first arrangement and the second arrangement are combined. In a catalyst lamination 12 of the third arrangement, a first catalyst layer 131 formed on a substrate 11, namely, the first catalyst layer 131 arranged at a position close to the substrate 11, has a first thickness. On the other hand, a catalyst layer 13n of the n-th layer, for example, that is arranged at a position separated from the substrate 11 (which will be described as a second catalyst layer 13n in this case) has a second thickness that is smaller than the first thickness. Further, the first catalyst layer 131 formed on the substrate 11 has a first void ratio. On the other hand, the catalyst layer 13n of the n-th layer that is arranged at a position separated from the substrate 11 (the second catalyst layer) has a second void ratio that is larger than the first void ratio.

In the third arrangement, the thickness of the uppermost second catalyst layer 13n out of the plurality of catalyst layers 13 is made to be smaller than the thickness of the first catalyst layer 131 formed on the substrate 11, and the void ratio of the uppermost second catalyst layer 13n is made to be larger than the void ratio of the first catalyst layer 131, as described above. These make it easy for supplied water to reach the catalyst layer 13 on the inner layer side via the second catalyst layer 13n having a small thickness and a large void ratio. Besides, it is possible to allow oxygen (O₂) produced through electrolysis of water (H₂O) to be easily released from the catalyst layer 13 on the inner layer side via the uppermost second catalyst layer 13n having a small thickness and a large void ratio. These make it possible to activate an electrolysis reaction of water (H₂O), for example.

In FIG. 4, the uppermost layer out of the plurality of catalyst layers 13, namely, the outermost layer that exists at the farthest position from the substrate 11 out of the plurality of catalyst layers 13 is set to the second catalyst layer 13n, but not necessarily limited to this. The second catalyst layer 13n having the second thickness that is smaller than the first thickness of the first catalyst layer 131 arranged at a position close to the substrate 11 and having the second void ratio that is larger than the first void ratio, is not limited to the uppermost catalyst layer 13n, and may also be the catalyst layer 13 being the second layer, the third layer, or the like from the outermost layer. Even in such a case, it becomes easy for the liquid such as supplied water to reach the catalyst layer 13 on the inner layer side, and it is also possible to allow the gas such as oxygen (O₂) being a product to be easily released. These make it possible to activate an electrochemical reaction such as an electrolysis reaction of water (H₂O), for example. The thicknesses and the void ratios of the catalyst layers are preferably set in the same manner as in the first arrangement and the second arrangement.

In the catalyst lamination 12 illustrated in FIG. 4, the plurality of catalyst layers 13 have the thicknesses that are sequentially reduced from the catalyst layer 131 formed on the substrate 11 toward the uppermost catalyst layer 13n. Further, the plurality of catalyst layers 13 have the void ratios that are sequentially increased from the catalyst layer 131 formed on the substrate 11 toward the uppermost catalyst layer 13n. By adopting the plurality of catalyst layers 13 having such thicknesses and void ratios, it is possible to make it easier for the liquid such as supplied water to reach the catalyst layer 131 that exists at a position separated from the uppermost catalyst layer 13n, and it is also possible to allow the gas such as oxygen (O₂) being a product to be more easily released, while maintaining the mechanical properties of the plurality of catalyst layers 13 stacked via the void layers 14. These make it possible to further activate the electrochemical reaction such as the electrolysis reaction of water (H₂O), for example.

The electrode 10 in the third arrangement can be manufactured by adopting the manufacturing condition described in the first arrangement and the manufacturing condition described in the second arrangement in a combined manner. Further, the thicknesses, the void ratios, and the like of the plurality of catalyst layers 13 in the third arrangement can be measured by a method same as that described in the first arrangement.

### (Fourth arrangement)

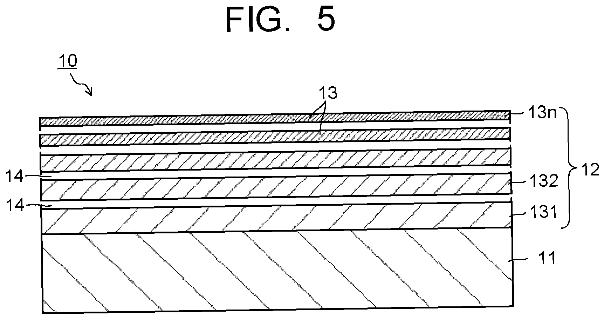

FIG. 5 is a sectional view illustrating an electrode for electrochemical reaction device according to a fourth arrangement. An electrode 10 for electrochemical reaction device illustrated in FIG. 5 adopts the thickness change of the catalyst layers 13 according to the first arrangement and the void ratio change of the catalyst layers 13 according to the second arrangement in a combined manner. However, regarding the void ratios of the catalyst layers 13, the first catalyst layer 131 formed on the substrate 11 has the first void ratio, and the catalyst layer 13n of the n-th layer, for example, that is arranged at a position separated from the substrate 11 (the second catalyst layer) has the second void ratio that is smaller than the first void ratio. Specifically, in the catalyst lamination 12 of the fourth arrangement, the catalyst layer 131 closer to the substrate 11 has a larger thickness and a larger void ratio, and on the other hand, the catalyst layer 13n arranged farther from the substrate 11 has a smaller thickness and a smaller void ratio. Even with such a configuration, it is possible to increase permeability of the liquid such as water, a desorption performance of produced gas, structural durability of the catalyst lamination 12, and so on.

The electrode 10 in the fourth arrangement can be manufactured by adopting the manufacturing condition described in the first arrangement and the manufacturing condition described in the second arrangement in a combined manner. However, the mixing ratios of the hole-forming material in the precursor layers 13X are set to be reduced from the substrate 11 side toward the uppermost layer side. Further, the thicknesses, the void ratios, and the like of the plurality of catalyst layers 13 in the fourth arrangement can be measured by a method same as that described in the first arrangement.

### (Fifth arrangement)

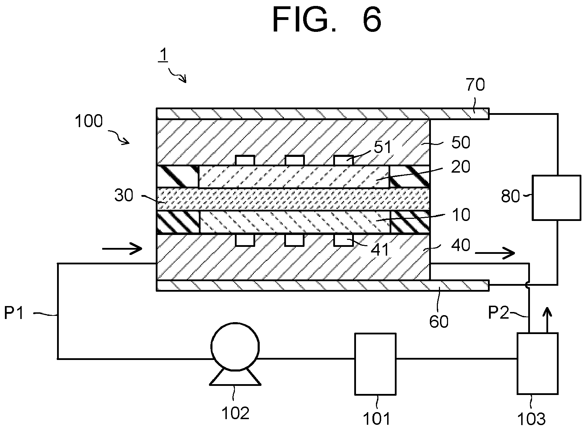

FIG. 6 illustrates a membrane electrode assembly and an electrochemical reaction device (water electrolysis device) according to a fifth arrangement. An electrochemical reaction device 1 illustrated in FIG. 6 includes a membrane electrode assembly 100, and an anode solution supply system 200. The membrane electrode assembly 100 includes a first electrode 20, a second electrode 10, and an electrolyte membrane 30. The second electrode 10 has a function as an anode. To the second electrode 10, the electrode 10 according to the first to fourth arrangements can be applied. The catalyst layer 13 of the second electrode 10 has an anode catalyst.

The substrate 11 of the electrode 10 is provided to face an anode flow path 41 through which an anode solution flows. The catalyst lamination 12 of the electrode 10 is provided to face the electrolyte membrane 30. The anode flow path 41 has a groove provided on a surface of an anode flow path plate 40. The anode flow path 41 has not-illustrated inlet and outlet. The inlet of the anode flow path 41 is connected to an anode supply flow path P1. The outlet of the anode flow path 41 is connected to an anode discharge flow path P2. A shape of the anode flow path 41 is not limited in particular, and it may be a serpentine shape along the surface of the anode flow path plate 40, for example. To the anode supply flow path P1, an ultrapure water producing device 101 and a pump 102 are provided. To the anode discharge flow path P2, a gas/liquid separating device 103 is connected. A liquid such as an electrolytic solution separated in the gas/liquid separating device 103 is supplied to the ultrapure water producing device 101. A solution supplied from the anode supply flow path P1 (anode solution) is preferably a solution containing at least water (H₂O). The anode solution may also be ultrapure water, for example. The anode solution may also contain nickel ions.

The electrode 20 has a function as a cathode. The electrode 20 has a cathode catalyst. The cathode catalyst is formed as a cathode catalyst layer on a substrate, for example. As the substrate, it is possible to use a material capable of being applied to the substrate 11 of the electrode 10. Note that the cathode catalyst layer may be formed by mixing a particulate cathode catalyst with a binder made of a proton conductive organic substance. Examples of the binder include polyvinyl alcohol (PVA).

A substrate of the electrode 20 is provided to face a cathode flow path 51. A cathode catalyst layer of the electrode 20 is provided to face the electrolyte membrane 30. The cathode flow path 51 has a groove provided on a surface of a cathode flow path plate 50. The cathode flow path 51 has a not-illustrated outlet. The outlet of the cathode flow path 51 is connected to a not-illustrated product collector, for example. A shape of the cathode flow path 51 is not limited in particular, and it may be a serpentine shape along the surface of the cathode flow path 51, for example.

The electrolyte membrane 30 is provided between the electrode 10 and the electrode 20. The electrolyte membrane 30 is constituted of an ion exchange membrane or the like capable of making ions move between the electrode 10 and the electrode 20, for example. Concrete examples of proton conductive ion exchange membrane include Nafion (registered trademark) being a fluorocarbon resin made by sulfonating and polymerizing tetrafluoroethylene manufactured by Du Pont, Aciplex (registered trademark) manufactured by Asahi Kasei Corporation, Flemion (registered trademark) manufactured by AGC Inc., and the like. A part of the catalyst layers of the electrode 10 and the electrode 20 may be included in the electrolyte membrane 30.

The electrode 10 and the electrode 20 are electrically connected to an anode current collector 60 and a cathode current collector 70, respectively. The anode current collector 60 and the cathode current collector 70 are electrically connected to a power supply 80 via a current introduction member. The power supply 80 is not limited to a normal system power supply or a power source such as a battery, and may have a power source that supplies electric power generated by renewable energy such as a solar cell or wind power generation. The power supply 80 may also have the aforementioned power source and a power controller or the like that adjusts an output of the aforementioned power source to control a voltage between the electrode 10 and the electrode 20.

The electrode 10, the electrode 20, the electrolyte membrane 30, the anode flow path plate 40, the cathode flow path plate 50, the anode current collector 60, and the cathode current collector 70 may be stacked one another. This stack is also referred to as an electrochemical reaction cell (an electrolysis cell, for example). The stack may be sandwiched by a pair of support plates, which are not illustrated, and further tightened by bolts or the like.

Next, a control method of the electrochemical reaction device 1 will be explained. When the electrolysis is performed by the electrochemical reaction device 1, an anode solution is supplied to the anode flow path 41, and a voltage is applied between the electrode 10 and the electrode 20 by the power supply 80 to supply a current. The anode solution is supplied to the catalyst layers 13 via the void layers 14 of the electrode 10. When the current is made to flow between the electrode 10 and the electrode 20, an oxidation reaction in the vicinity of the electrode 10 and a reduction reaction in the vicinity of the electrode 20 occur, which will be described below. Here, a case of oxidizing water to produce hydrogen ions, and reducing the hydrogen ions to produce hydrogen will be explained, but another side reaction may occur.

A reaction process in a case of oxidizing water (H₂O) to produce hydrogen ions (H⁺) will be described. When a current is supplied between the electrode 10 and the electrode 20 from the power supply 80, an oxidation reaction of water (H₂O) occurs in the electrode 10 that is in contact with the anode solution. Concretely, as presented in the following formula (1), H₂O contained in the anode solution is oxidized, and oxygen (O₂), hydrogen ions (H⁺), and electrons (e⁻) are produced. The oxygen produced in the electrode 10 passes through the void layers 14 to be discharged to the outside of the electrode 10. The discharged oxygen may be collected by a not-illustrated anode product collector.

2H₂O → 4H⁺ + O₂ + 4e⁻ ··· (1)

H⁺ produced in the electrode 10 moves in the anode solution existing in the electrode 10, and the electrolyte membrane 30, and reaches the vicinity of the electrode 20. The reduction reaction of hydrogen ions occurs by electrons (e⁻) based on the current supplied from the power supply 80 to the electrode 20 and H⁺ moved to the vicinity of the electrode 20. Concretely, as presented in the following formula (2), hydrogen is produced through the reduction of hydrogen ions. The hydrogen produced in the electrode 20 is discharged from the outlet of the cathode flow path 51. The discharged hydrogen may be collected by a not-illustrated cathode product collector.

4H⁺ + 4e⁻ → 2H₂O ··· (2)

Although the fifth arrangement has explained the example of applying the electrochemical reaction device to the water electrolysis device, the electrochemical reaction device of the arrangement is not limited to the above. The electrochemical reaction device of the arrangement can also be applied to a fuel cell including an electrochemical reaction cell having a configuration similar to that of the water electrolysis device, a solid oxide electrolysis cell (SOEC) and a solid oxide fuel cell (SOFC) each using an electrolyte made of a solid oxide, an electrolysis device of carbon dioxide (CO₂), and the like.

Note that configurations of the above-described respective arrangements may be each adopted in combination, and further may be partially substituted. Herein, while certain arrangements of the present invention have been described, these arrangements have been presented by way of example only, and are not intended to limit the scope of the inventions. Indeed, the novel arrangements described herein may be embodied in a variety of other forms; furthermore, various omissions, substitutions, changes, and so on in the form of the arrangements described herein may be made without departing from the spirit of the inventions. The accompanying claims and their equivalents are intended to cover such forms or modifications as would fall within the scope and spirit of the invention.

(Numbered Clauses relating to the arrangements)
1. An electrode for electrochemical reaction device, comprising:
   a substrate; and
   a catalyst lamination provided on the substrate, and having a plurality of catalyst layers, and void layers respectively arranged between the plurality of catalyst layers adjacent to each other, wherein
   the plurality of catalyst layers include a first catalyst layer arranged at a position close to the substrate and having a first thickness, and a second catalyst layer arranged at a position separated from the substrate and having a second thickness that is smaller than the first thickness.
2. The electrode according to clause 1, wherein
   the plurality of catalyst layers have thicknesses that are sequentially reduced from a position close to the substrate toward a position of an uppermost layer of the plurality of catalyst layers.
3. The electrode according to clause 1 or clause 2, wherein
   the plurality of catalyst layers have void ratios that are sequentially increased from a position close to the substrate toward a position of an uppermost layer of the plurality of catalyst layers.
4. The electrode according to clause 1 or clause 2, wherein
   the plurality of catalyst layers have void ratios that are sequentially reduced from a position close to the substrate toward a position of an uppermost layer of the plurality of catalyst layers.
5. The electrode according to any one of clause 1 to clause 4, wherein
   the plurality of catalyst layers contain at least one noble metal selected from a group consisting of iridium, ruthenium, platinum, palladium, rhodium, osmium, gold, and silver, an alloy containing the noble metal, an oxide of the noble metal, or a composite oxide containing the noble metal.
6. An electrode for electrochemical reaction device, comprising:
   a substrate; and
   a catalyst lamination provided on the substrate, and having a plurality of catalyst layers, and void layers respectively arranged between the plurality of catalyst layers adjacent to each other, wherein
   the plurality of catalyst layers include a first catalyst layer arranged at a position close to the substrate and having a first void ratio, and a second catalyst layer arranged at a position separated from the substrate and having a second void ratio that is larger than the first void ratio.
7. The electrode according to clause 6, wherein
   the plurality of catalyst layers have void ratios that are sequentially increased from a position close to the substrate toward a position of an uppermost layer of the plurality of catalyst layers.
8. The electrode according to clause 6, wherein
   the plurality of catalyst layers have void ratios that are sequentially reduced from a position close to the substrate toward a position of an uppermost layer of the plurality of catalyst layers.
9. The electrode according to any one of clause 6 to clause 8, wherein
   the plurality of catalyst layers contain at least one noble metal selected from a group consisting of iridium, ruthenium, platinum, palladium, rhodium, osmium, gold, and silver, an alloy containing the noble metal, an oxide of the noble metal, or a composite oxide containing the noble metal.
10. A membrane electrode assembly, comprising:
   a first electrode;
   a second electrode; and
   an electrolyte membrane arranged between the first electrode and the second electrode, wherein
   at least either of the first electrode and the second electrode comprises the electrode according to any one of clause 1 to clause 9.
11. An electrochemical reaction device, comprising the membrane electrode assembly according to clause 10.
12. The electrochemical reaction device according to clause 11, comprising a water electrolysis device.

## Claims

1. An electrode for electrochemical reaction device, comprising:
a substrate; and
a catalyst lamination provided on the substrate, and having a plurality of catalyst layers, and void layers respectively arranged between the plurality of catalyst layers adjacent to each other, wherein
the plurality of catalyst layers include a first catalyst layer arranged at a position close to the substrate and having a first thickness, and a second catalyst layer arranged at a position separated from the substrate and having a second thickness that is smaller than the first thickness.

2. The electrode according to claim 1, wherein
the plurality of catalyst layers have thicknesses that are sequentially reduced from a position close to the substrate toward a position of an uppermost layer of the plurality of catalyst layers.

3. The electrode according to claim 1 or claim 2, wherein
the plurality of catalyst layers have void ratios that are sequentially increased from a position close to the substrate toward a position of an uppermost layer of the plurality of catalyst layers.

4. The electrode according to claim 1 or claim 2, wherein
the plurality of catalyst layers have void ratios that are sequentially reduced from a position close to the substrate toward a position of an uppermost layer of the plurality of catalyst layers.

5. The electrode according to any one of claim 1 to claim 4, wherein
the plurality of catalyst layers contain at least one noble metal selected from a group consisting of iridium, ruthenium, platinum, palladium, rhodium, osmium, gold, and silver, an alloy containing the noble metal, an oxide of the noble metal, or a composite oxide containing the noble metal.

6. An electrode for electrochemical reaction device, comprising:
a substrate; and
a catalyst lamination provided on the substrate, and having a plurality of catalyst layers, and void layers respectively arranged between the plurality of catalyst layers adjacent to each other, wherein
the plurality of catalyst layers include a first catalyst layer arranged at a position close to the substrate and having a first void ratio, and a second catalyst layer arranged at a position separated from the substrate and having a second void ratio that is larger than the first void ratio.

7. The electrode according to claim 6, wherein
the plurality of catalyst layers have void ratios that are sequentially increased from a position close to the substrate toward a position of an uppermost layer of the plurality of catalyst layers.

8. The electrode according to claim 6, wherein
the plurality of catalyst layers have void ratios that are sequentially reduced from a position close to the substrate toward a position of an uppermost layer of the plurality of catalyst layers.

9. The electrode according to any one of claim 6 to claim 8, wherein
the plurality of catalyst layers contain at least one noble metal selected from a group consisting of iridium, ruthenium, platinum, palladium, rhodium, osmium, gold, and silver, an alloy containing the noble metal, an oxide of the noble metal, or a composite oxide containing the noble metal.

10. A membrane electrode assembly, comprising:
a first electrode;
a second electrode; and
an electrolyte membrane arranged between the first electrode and the second electrode, wherein
at least either of the first electrode and the second electrode comprises the electrode according to any one of claim 1 to claim 9.

11. An electrochemical reaction device, comprising the membrane electrode assembly according to claim 10.

12. The electrochemical reaction device according to claim 11, comprising a water electrolysis device.
